# FASCICULE DE BREVET EUROPEEN

(11) **EP 3 145 968 B1**
(45) Date de publication et mention de la délivrance du brevet: **11.04.2018**
(21) Numéro de dépôt: 15726054.8
(22) Date de dépôt: 20.05.2015
(51) Int. Cl.: C08F 230/04

(54) **PROCEDE DE PREPARATION DE MATERIAUX POLYMERES COMPRENANT DE L'OR**
VERFAHREN ZUR HERSTELLUNG VON POLYMERMATERIALIEN MIT GOLD
METHOD FOR PRODUCING POLYMER MATERIALS COMPRISING GOLD

(30) Priorité: 23.05.2014 FR 1454689
(43) Date de publication de la demande: 29.03.2017
(73) Titulaire: Commissariat à l'Énergie Atomique et aux Énergies Alternatives, 75015 Paris (FR)
(72) Inventeur: CADRA, Stéphane, F-37550 Saint Avertin (FR); POUPONEAU, Pierre, F-37300 Joue-les-Tours (FR); BALLAND LONGEAU, Alexia, F-37000 Tours (FR)
(74) Mandataire: Brevalex
(86) Numéro de dépôt international: PCT/EP2015/061172
(87) Numéro de publication internationale: WO 2015/177243

(56) Documents cités:
- WO-A1-2009/047245
- WO-A1-2011/061229
- C. CROIX ET AL: "New Gold-Doped Foams by Copolymerization of Organogold(I) Monomers for Inertial Confinement Fusion (ICF) Targets", JOURNAL OF INORGANIC AND ORGANOMETALLIC POLYMERS AND MATERIALS, vol. 18, no. 3, 28 février 2008 (2008-02-28), pages 334-343, XP055147703, ISSN: 1574-1443, DOI: 10.1007/s10904-008-9204-1
- MOREAU L ET AL: "Recent advances in development of materials for laser target", LASER AND PARTICLE BEAMS, CAMBRIDGE UNIVERSITY PRESS, CAMBRIDGE, GB, vol. 27, no. 4, 1 janvier 2009 (2009-01-01), pages 537-544, XP008127624, ISSN: 0263-0346, DOI: 10.1017/S0263034609000317
- JIUYANG ZHANG ET AL: "Cobaltocenium-Containing Methacrylate Homopolymers, Block Copolymers, and Heterobimetallic Polymers via RAFT Polymerization", MACROMOLECULES, vol. 45, no. 17, 11 septembre 2012 (2012-09-11), pages 6857-6863, XP055147970, ISSN: 0024-9297, DOI: 10.1021/ma3012784

## Description

### DOMAINE TECHNIQUE

La présente invention a trait à un nouveau procédé de préparation de matériaux polymères, en particulier, de mousses polymères, comprenant de l'or et éventuellement un autre élément métallique, dont la teneur en or et en l'éventuel autre élément métallique peut être ajustée facilement selon les besoins de l'application.

Ces matériaux, du fait de la combinaison d'éléments organiques et inorganiques, peuvent présenter des propriétés de nature mécanique, thermique, électrique ou magnétique intéressantes.

Ces matériaux polymères peuvent être utilisés, notamment, dans de nombreuses applications où le dopage par de l'or revêt une importance, tel que cela est le cas de la catalyse supportée, des matériaux luminescents, des matériaux magnétiques, des matériaux organométalliques structurés, les matériaux pour la décontamination des solutions organiques et aqueuses, les matériaux à empreinte ionique. En particulier, ils peuvent trouver leur application dans l'élaboration de cibles laser utilisées lors d'expériences de fusion par confinement inertiel.

Le domaine général de l'invention est ainsi celui des matériaux polymériques dopés par un ou plusieurs éléments métalliques.

### ÉTAT DE LA TECHNIQUE ANTÉRIEURE

Eu égard au champ d'application extrêmement vaste de ce type de matériaux, de nombreuses équipes ont axé leur recherche sur des techniques d'élaboration de tels matériaux, tels que :
- la (co)polymérisation de monomères porteurs de l'élément métallique; et
- l'incorporation de particules métalliques, par exemple, des nano- ou microparticules dans le milieu de polymérisation ou dans une matrice polymérique déjà formée.

Concernant la (co)polymérisation de monomères métalliques, cette technique repose sur le principe de présence de l'élément métallique dans le milieu de polymérisation, cette présence étant générée par l'utilisation de monomères porteurs de l'élément métallique dopant souhaité, l'élément métallique pouvant faire partie intégrante de la molécule de monomère (auquel cas on parle de monomères métalliques), comme décrit par C. CROIX ET AL: "New Gold-Doped Foams by Copolymerization of Organogold(I) Monomers for Inertial Confinement Fusion (ICF) Targets", JOURNAL OF INORGANIC AND ORGANOMETALLIC POLYMERS AND MATERIALS, vol. 18, no. 3,(2008-02-28), pages 334-343, ou peut être lié à celle-ci par une réaction de complexation, comme décrit par WO2011/061229 et WO2009/047245. Cette technique nécessite le développement d'une chimie spécifique à chaque type spécifique et peut, plus spécifiquement, nécessiter la préparation des monomères associés à l'élément métallique, ce qui peut s'avérer fastidieux et long en termes de mise en oeuvre, lorsqu'il s'agit de préparer un matériau polymérique dopé, par exemple, par de l'or et par un autre élément métallique distinct.

Enfin, concernant l'incorporation de particules métalliques, deux voies ont déjà été explorées :
- l'incorporation de microparticules d'or dans un milieu de polymérisation précurseur d'une matrice polymérique, comme décrit dans Nazarov et al., Fusion Science and Technology, 2004, 45 :5 ; et
- l'incorporation de nanoparticules d'or dans une matrice organique éventuellement modifiée.

Ainsi, dans Fusion Science and Technology, 2004, 45 :5, il est décrit un procédé de fabrication de matériaux polymères dopés à l'or, dans lequel les particules d'or sont directement mises en contact avec les monomères, les comonomères, le catalyseur et le solvant porogène. La difficulté avec ce procédé réside dans l'obtention d'une répartition homogène des particules d'or, car ces dernières peuvent avoir tendance à s'agglomérer, ce qui nécessite l'utilisation d'une sonde à ultrasons pour optimiser la dispersion des particules. Toutefois, compte tenu que certains monomères, comme les monomères acrylates, peuvent polymériser lors de l'utilisation des ultrasons, la dispersion des particules d'or est réalisée, de préférence, sans la présence des monomères et comonomères. Toutefois, cette précaution ne supprime pas les inconvénients liés à la contamination métallique induite par la dégradation de la surface de la sonde et liés à la sédimentation des particules d'or, une fois mises en contact avec les monomères et comonomères, ce qui nuit à l'obtention d'une distribution homogène des particules dans le matériau. En mettant en oeuvre ce procédé avec des mousses de triméthylolpropanetriacrylate et des particules d'or de différents diamètres (0,2 ; 0,8-1,5 ; 1,5-3 et 5-9 µm), il n'a pas été possible d'obtenir plus de 15% massique d'or incorporé dans la mousse qui présente, qui plus est, une masse volumique de 50 mg.cm⁻³.

Concernant l'incorporation de nanoparticules d'or dans la matrice polymérique, plusieurs options ont été envisagées.

Ainsi, dans Anal. Chem. 2010, 82 (17) :6, il est décrit un procédé de préparation d'une mousse polymérique dopée par de l'or, ce procédé comprenant respectivement :
- une étape de modification d'une mousse polymérique en poly(glycidylméthacrylate-co-éthylènediméthacrylate) consistant à faire réagir les groupes époxydes avec de la cystéamine, moyennant quoi il se forme des groupes thiols ;
- une étape de mise en place dudit matériau résultant dans une colonne chromatographique, ce matériau constituant ainsi le matériau de remplissage de la colonne ; et
- une étape de passage d'une solution commerciale de nanoparticules d'or (présentant un diamètre allant de 10 à 15 nm) sur la colonne susmentionnée, moyennant quoi les nanoparticules sont captées par les groupes thiols.

Ce procédé présente pour inconvénient de ne pas permettre une distribution homogène de l'or dans la mousse, en cas d'utilisation d'une solution présentant une quantité importante de nanoparticules, car l'augmentation de la concentration en nanoparticules peut accélérer la saturation des pores en surface du matériau.

Dans RSC Advances, 2011, 1 :6, il est décrit un procédé de fabrication d'une mousse dopée à l'or consistant, dans un premier temps, à disperser des nanoparticules d'or présentant un diamètre allant de 13 à 101 nm dans une solution d'agar à 60°C. Après refroidissement à température ambiante, l'hydrogel résultant est transformé en aérogel par lyophilisation. Par la mise en oeuvre de ce procédé, le phénomène d'agglomération des nanoparticules peut être évité. Toutefois, le taux de nanoparticules dans la mousse résultante ne dépasse pas 8% en masse pour une masse volumique de 28 mg/cm³.

Au vu de ce qui existe, les inventeurs se sont fixé pour but de proposer un nouveau procédé de préparation d'un matériau polymérique dopé par de l'or et éventuellement un ou plusieurs autres éléments métalliques permettant, entre autres :
- l'incorporation d'une quantité importante d'or, si besoin est, par exemple, une quantité d'or présentant une teneur massique supérieure à 30% ;
- éventuellement, l'incorporation d'un autre élément métallique en quantité contrôlée ; et
- la modulation des propriétés morphologiques du matériau.

### EXPOSÉ DE L'INVENTION

Les auteurs de la présente invention ont découvert, de manière surprenante, qu'en associant, lors de la fabrication du matériau, un premier monomère à un deuxième monomère spécifique présentant une affinité complexante particulière selon la nature du milieu d'imprégnation, pour l'or ou pour un autre élément métallique, il est possible d'obtenir les avantages mentionnés ci-dessus.

Ainsi, l'invention a trait à un procédé de préparation d'un matériau polymérique dopé par un premier élément métallique, qui est de l'or et au moins un deuxième élément métallique, ledit premier élément métallique et ledit, au moins un deuxième élément métallique étant identiques ou différents l'un de l'autre, ledit procédé comprenant :
a) une étape de copolymérisation d'au moins un premier monomère comprenant au moins un groupe chélateur dudit premier élément métallique et d'au moins un deuxième monomère comprenant au moins un groupe chélateur d'au moins un deuxième élément métallique, moyennant quoi l'on obtient un matériau polymérique comprenant des unités répétitives issues de la polymérisation dudit premier monomère, lesquelles unités répétitives comprennent au moins un groupe chélateur dudit premier élément métallique et comprenant des unités répétitives issues de la polymérisation dudit deuxième monomère, lesquelles unités répétitives comprennent au moins un groupe chélateur dudit au moins un deuxième élément métallique, ledit deuxième monomère étant choisi parmi :
   - les monomères aromatiques comprenant au moins un cycle aromatique, lequel cycle comprend au moins un groupe éthylénique, au moins un groupe hydroxyde -OH, au moins un groupe oxime et les éventuels sels de ceux-ci ; et
   - les monomères comprenant un groupe amine alicyclique ; et
   ledit premier monomère étant, avantageusement, un monomère cyclique comprenant au moins un groupe azoté ;
b) lorsque le premier élément métallique, et ledit au moins un deuxième élément métallique sont identiques (c'est-à-dire qu'ils correspondent tous les deux à l'élément or), une étape de mise en contact du matériau obtenu en a) avec une solution aqueuse comprenant de l'or, moyennant quoi l'or est complexé aux groupes chélateurs susmentionnés ; et
b') lorsque le premier élément métallique et ledit au moins un deuxième élément métallique sont différents, une première étape de mise en contact du matériau obtenu en a) avec une solution alcoolique comprenant de l'or suivie d'une deuxième étape de mise en contact du matériau avec une solution aqueuse comprenant ledit au moins un deuxième élément métallique.

Avant d'entrer plus en détail dans la description de cette invention, nous précisons les définitions suivantes.

Par premier monomère comprenant au moins un groupe chélateur d'un premier élément métallique, on entend, classiquement, un monomère porteur d'au moins un groupe polymérisable et comprenant au moins un groupe pendant apte à complexer ledit premier élément métallique, ce qui signifie, en d'autres termes, que ledit premier élément métallique est apte à se lier audit groupe pendant par une liaison de coordination par partage d'un doublet libre ou par une liaison ionique par partage d'une charge négative portée par ledit groupe pendant avec ledit premier élément métallique à fixer.

Par deuxième monomère comprenant au moins un groupe chélateur d'au moins un deuxième élément métallique, on entend, classiquement, un monomère porteur d'au moins un groupe polymérisable et comprenant au moins un groupe pendant apte à complexer ledit au moins un deuxième élément métallique, ce qui signifie, en d'autres termes, que ledit au moins un deuxième élément métallique est apte à se lier audit groupe pendant par une liaison de coordination par partage d'un doublet libre ou par une liaison ionique par partage d'une charge négative portée par ledit groupe pendant avec ledit au moins un deuxième élément métallique à fixer.

Il est entendu, de manière classique, que ledit premier monomère et ledit deuxième monomère sont différents l'un de l'autre.

Par deuxième élément métallique, lorsque celui-ci est différent de l'or, on entend, classiquement, un élément appartenant à la catégorie des éléments de transition, des éléments lanthanides, des éléments actinides ou des éléments choisis parmi Al, Ga, Ge, In, Sn, Sb, Tl, Pb, Bi et Po. Plus spécifiquement, il peut s'agir d'un élément de transition, tel que le cuivre.

De ce procédé innovant d'élaboration de matériaux polymériques dopés par de l'or découlent les avantages suivants :
- lorsque le premier élément chimique et ledit deuxième élément chimique sont de l'or, il permet, par le choix du deuxième monomère spécifique et le choix du milieu aqueux comme milieu de mise en contact, l'incorporation d'une quantité importante d'or (par exemple, une teneur massique supérieure à 30%) dans le matériau polymérique tout en permettant de moduler les propriétés morphologiques du matériau (par exemple, en termes de surface spécifique, de masse volumique) ; et
- lorsque le premier élément chimique et le deuxième élément chimique sont différents, il permet, par le choix du deuxième monomère spécifique apte à complexer au moins un deuxième élément métallique, de manière préférentielle, en milieu aqueux et le choix d'un milieu alcoolique pour la première étape de mise en contact et d'un milieu aqueux pour la deuxième étape de mise en contact, l'obtention simple d'un matériau bimétallique à base d'or ; et
- il est facilement reproductible, notamment en ce qui concerne le taux du premier élément métallique et du deuxième élément métallique présents dans le matériau polymérique, du fait que ce taux est lié à la quantité de premier monomère et de deuxième monomère.

Comme mentionné ci-dessus, le procédé de l'invention comprend, en premier lieu, une étape de copolymérisation d'au moins un premier monomère comprenant au moins un groupe chélateur dudit premier élément métallique et d'au moins un deuxième monomère comprenant au moins un groupe chélateur d'au moins un deuxième élément métallique, moyennant quoi l'on obtient un matériau polymérique comprenant des unités répétitives issues de la polymérisation dudit premier monomère, lesquelles unités répétitives comprennent au moins un groupe chélateur dudit premier élément métallique et comprenant des unités répétitives issues de la polymérisation dudit deuxième monomère, lesquelles unités répétitives comprennent au moins un groupe chélateur dudit au moins un deuxième élément métallique, ledit deuxième monomère étant choisi parmi :
- les monomères aromatiques comprenant au moins un cycle aromatique, lequel cycle comprenant au moins un groupe éthylénique, au moins un groupe hydroxyde -OH, au moins un groupe oxime et les éventuels sels de ceux-ci ; et
- les monomères comprenant un groupe amine alicyclique.

Ledit premier monomère est, avantageusement, un monomère cyclique comprenant au moins un groupe azoté, étant entendu que ce monomère cyclique est différent du deuxième monomère défini ci-dessus.

Plus spécifiquement, le premier monomère peut être un monomère hétéroaromatique comprenant un ou plusieurs atomes d'azote.

Des monomères hétéroaromatiques comprenant un ou plusieurs atomes d'azote peuvent être des monomères vinylimidazoles, tels qu'un monomère vinylimidazole répondant à la formule (I) suivante :

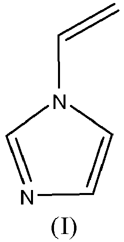

En ce qui concerne le deuxième monomère, lorsqu'il s'agit d'un monomère aromatique comprenant au moins un groupe oxime, il peut répondre, spécifiquement, à la formule (II) suivante : 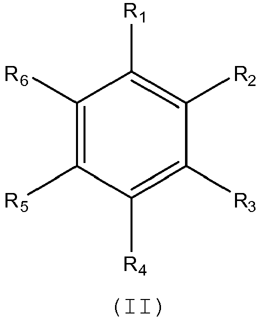 dans laquelle :
- R₁ est un groupe éthylénique ;
- R₂, R₃, R₄, R₅ et R₆ représentent, indépendamment l'un de l'autre, un atome d'hydrogène, un groupe -OH, un groupe amine, un groupe -CHO, un groupe oxime, un groupe hydrazone, un groupe carboxyle -COOH, un atome d'halogène, un groupe trialkylsilane, et les éventuels sels de ceux-ci, à condition que l'un au moins des groupes R₂ à R₆ représente un groupe -OH et
l'un au moins des groupes R₂ à R₆ représente un groupe oxime.

Par groupe amine, on entend classiquement un groupe amine primaire -NH₂, un groupe amine secondaire (à savoir, un groupe amine dont l'un des atomes d'hydrogène initialement porté par l'atome d'azote est substitué par un autre groupe, tel qu'un groupe alkyle) ou un groupe amine tertiaire (à savoir, un groupe amine dont les deux atomes d'hydrogène initialement portés par l'atome d'azote sont substitués par un autre groupe, tel qu'un groupe alkyle).

Par groupe oxime, on entend classiquement un groupe comprenant la fonction -C=N-OH , par exemple un groupe répondant à la formule -CR'=NOH, où R' représente un atome d'hydrogène, un groupe alkyle, un groupe aryle, un groupe alkylaryle, un groupe perfluoroalkyle, un groupe perfluoroaryle, un groupe perfluoroalkylaryle, un groupe acyle, un groupe carbonyle, un groupe trialkylsilane.

Par groupe hydrazone, on entend classiquement un groupe comprenant la fonction -C=N-N-, par exemple, un groupe répondant à la formule -CR'=N-NR"R''', dans laquelle R', R" et R''' représentent, indépendamment l'un de l'autre, un atome d'hydrogène, un groupe alkyle, un groupe aryle, un groupe alkylaryle, un groupe perfluoroalkyle, un groupe perfluoroaryle, un groupe perfluoroalkylaryle, un groupe acyle, un groupe carbonyle ou un groupe trialkylsilane.

Par atome d'halogène, on entend, classiquement, selon l'invention un atome choisi parmi le fluor, le chlore, le brome et l'iode.

Par groupe alkyle, on entend, classiquement, selon l'invention dans ce qui précède et ce qui suit, un groupe alkyle linéaire ou ramifié comprenant de 1 à 20 atomes de carbone, un groupe cyclique comprenant de 3 à 20 atomes de carbones. On peut citer parmi ces groupes le groupe méthyle, éthyle, n-propyle, i-propyle, n-butyle, n-dodécanyle, i-butyle, t-butyle, cyclopropyle, cyclohexyle. Ces groupes peuvent comprendre dans leur chaîne un ou plusieurs atomes choisis parmi O, S, Se et/ou N.

Par groupe aryle, on entend, classiquement, selon l'invention dans ce qui précède et ce qui suit, un groupe de 6 à 20 atomes de carbone. On peut citer, parmi ces groupes, le groupe benzyle, naphtyle, tolyle, biphényle.

Par groupe alkylaryle, on entend, classiquement, selon l'invention dans ce qui précède et ce qui suit, un groupe aryle de même définition que celle donnée précédemment, ledit groupe étant substitué par au moins une chaîne alkyle, pouvant comporter un ou plusieurs atomes d'O, de N, de Se et/ou de S.

Par groupe perfluoroalkyle, perfluoraryle, perfluoroalkylaryle, on entend des groupes dont les atomes d'hydrogène sont totalement substitués par des atomes de fluor (les alkyles, aryles répondant à la même définition que celle donnée précédemment). Par exemple, on peut citer le trifluorométhyle -CF₃, le perfluoroéthyle, le perfluorobutyle, le perfluoropropyle, le perfluoropentyle, le perfluorophényl C₆F₅-, le perfluorobiphényle, le perfluorobenzyle.

De préférence, le groupe -OH et le groupe oxime sont situés en position *ortho* l'un de l'autre sur un même cycle aromatique, par exemple, sur un cycle phényle.

Ainsi, un monomère particulier répondant à cette définition est un monomère répondant à la formule (III) suivante :

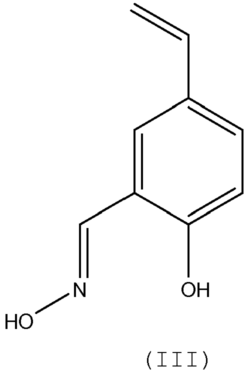

Des monomères comprenant un groupe amine alicyclique, pouvant faire office de deuxième monomère, peuvent être des monomères comprenant un groupe cyclame, tels que des monomères répondant à la formule (IV) suivante : 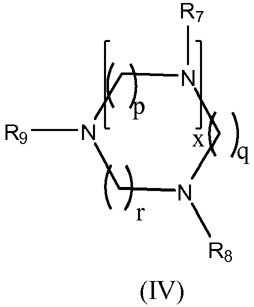 dans laquelle :
- R₇, R₈ et R₉ représentent un groupe styrénique ; et
- p, q, r, x sont des entiers allant de 0 à 20, à la condition que, lorsque x est égal à 0, (r+q) est au moins égale à 2, et lorsque x est égal à 1, au moins l'un des p, q, r est différent de 0.

Un monomère particulier répondant à cette définition peut être un monomère de formule (V) suivante :

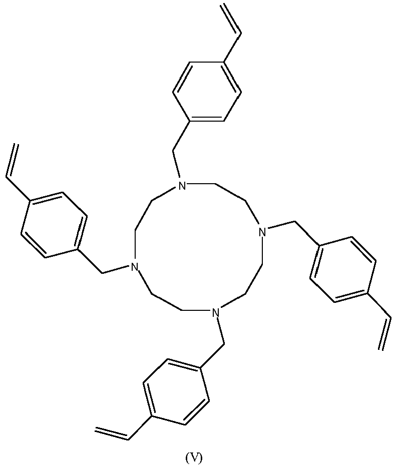

Outre les monomères susmentionnés, l'étape de copolymérisation peut être réalisée en présence d'un ou plusieurs comonomères, lesdits comonomères étant, généralement différents des monomères susmentionnés.

Ces comonomères peuvent être choisis parmi les monomères styréniques et les monomères acrylates.

Avantageusement, les comonomères comprennent au moins deux groupes éthyléniques, assurant ainsi un rôle d'agent de réticulation. Les matériaux ainsi obtenus présentent une bonne tenue mécanique.

Des comonomères susceptibles d'être utilisés peuvent être des monomères styréniques de formule (VI) suivante : 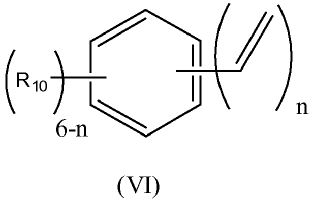 dans laquelle les (6-n) R₁₀, identiques ou différents, représentent un atome d'hydrogène, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés et n est un entier allant de 1 à 3, de préférence, n étant égal à 2.

En particulier, un comonomère approprié peut être le divinylbenzène, en particulier le 1,4-divinylbenzène.

Des comonomères susceptibles d'être utilisés peuvent être également des composés acrylates de formule (VII) suivante : 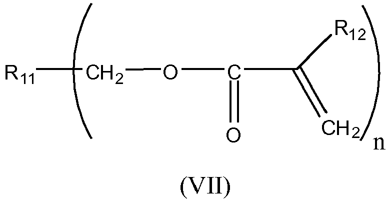 dans laquelle R₁₁ représente un groupe alkyle, R₁₂ représente H ou un groupe alkyle et n étant un entier allant de 1 à 3.

En particulier, un comonomère approprié de ce type peut être le triméthylolpropanetriacrylate (connu sous l'abréviation TMPTA) de formule (VIII) suivante :

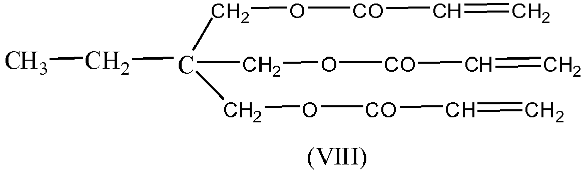

L'étape de copolymérisation est réalisée, de préférence, en présence d'au moins un initiateur de polymérisation, tel qu'un amorceur radicalaire classiquement choisi parmi les composés peroxydes, les azonitriles (tel que le 2,2'-azobisisobutyronitrile (connu sous l'abréviation AiBN), le 2,2'-azodi(2,4-diméthyl-4-méthoxyvaléronitrile) (également dénommé V70), les azoesters, les azoamides.

L'initiateur de polymérisation peut être introduit, dans le milieu de polymérisation, selon des quantités variables, par exemple, selon des quantités pouvant aller de 0 à 50% massique, par rapport à la masse totale de monomères mise en jeu.

L'étape de polymérisation peut être réalisée, en outre, en présence d'au moins un solvant porogène, qui peut être un solvant organique polaire ou apolaire et peut être choisi parmi les solvants éthers (tels que le tétrahydrofurane, le 2-méthyltétrahydrofurane, le 3-méthyltétrahydrofurane), le diméthylsulfoxyde, les solvants phthalates (tels que le diméthylphthalate, le dibutylphthalate), les solvants alcooliques (tels que le méthanol, l'éthanol), les solvants aromatiques (tels que le toluène, le fluorobenzène), les solvants cétones et les mélanges de ceux-ci.

Le mode de polymérisation peut être de tous types, tel que la polymérisation thermique (par exemple, en chauffant de 40 à 100°C) ou tel que la polymérisation photochimique en présence d'ultraviolets.

En particulier, l'étape a) peut être mise en oeuvre :
- en présence d'un monomère de formule (I) avec un monomère de formule (III) et du divinylbenzène ; ou
- en présence d'un monomère de formule (I) avec un monomère de formule (V) et du divinylbenzène.

A l'issue de l'étape a), le matériau peut se présenter, classiquement, sous forme d'un gel ou encore d'un matériau massif poreux.

Le matériau peut être, avant la mise en oeuvre de l'étape b) ou b'), soumis à un ou plusieurs lavages, pour éliminer le ou les solvants organiques utilisés lors de l'étape a), ce lavage pouvant être suivi éventuellement, le cas échéant, d'une opération de remplacement du solvant de lavage présent dans le matériau par le solvant utilisé pour l'étape b) ou l'étape b').

Lorsque le premier élément métallique et le deuxième élément métallique sont tous deux de l'or, le procédé de l'invention comprend une étape b) de mise en contact du matériau obtenu en a) avec une solution aqueuse comprenant de l'or, moyennant l'or est complexé aux groupes chélateurs susmentionnées, à savoir les groupes chélateurs du premier monomère et les groupes chélateurs du deuxième monomère.

Plus spécifiquement, la solution aqueuse comprenant de l'or peut consister en une solution aqueuse, dans laquelle est solubilisé un sel ou un complexe d'or.

A titre d'exemples de sel ou complexe métallique d'or, on peut citer les chlorures, bromures, fluorures, iodures, iodates, nitrates, sulfates, sulfonates, sulfites, nitrites, phosphates, phosphites, cyanures, azidures, hydroxyles, chlorates, perchlorates, acétates, trifluorométhanesulfonates, trifluoroacétates, trichloroacétates.

Des exemples spécifiques de sel d'or peuvent être HAuCl₄.

D'un point de vue concret, l'étape de mise en contact b) peut consister à immerger le matériau obtenu à l'étape a) dans une solution aqueuse comprenant un sel ou complexe d'or pendant une durée appropriée pour imprégner le matériau obtenu à l'étape a) et permettre à l'or de se complexer, à la fois, avec les groupes complexants compris dans les unités répétitives issues de la polymérisation du premier monomère et avec les groupes complexants compris dans les unités répétitives issues de la polymérisation du deuxième monomère.

Lorsque le premier élément métallique et ledit au moins un deuxième élément métallique sont différents, le procédé de l'invention comprend une première étape de mise en contact du matériau obtenu en a) avec une solution alcoolique comprenant de l'or suivie d'une deuxième étape de mise en contact du matériau avec une solution aqueuse comprenant ledit au moins un deuxième élément métallique.

Il est entendu que, dans ce cas, les groupes complexants contenus dans les unités répétitives issues du premier monomère et les groupes complexants contenus dans les unités répétitives issues du deuxième monomère ne doivent pas présenter des capacités complexantes dans la même solution, ce qui signifie, en d'autres termes que, dans notre cas de figure :
- les groupes complexants contenus dans les unités répétitives issues du premier monomère complexent l'or en milieu alcoolique, ce qui n'est pas le cas des groupes complexants contenus dans les unités répétitives issues du deuxième monomère ; et
- les groupes complexants contenus dans les unités répétitives issues du deuxième monomère complexent le deuxième élément métallique en milieu aqueux, ce qui n'est pas le cas des groupes complexants contenus dans les unités répétitives issues du premier monomère,
ce qui sous-entend aussi que le complexe formé entre l'or et les groupes complexants contenus dans les unités répétitives issues du premier monomère soit stable en milieu aqueux.

Plus spécifiquement, pour la première étape de mise en contact, la solution alcoolique comprenant de l'or peut consister en une solution alcoolique (par exemple, éthanolique ou méthanolique), dans laquelle est solubilisé un sel ou un complexe d'or.

A titre d'exemples de sel ou complexe métallique d'or, on peut citer les chlorures, bromures, fluorures, iodures, iodates, nitrates, sulfates, sulfonates, sulfites, nitrites, phosphates, phosphites, cyanures, azidures, hydroxyles, chlorates, perchlorates, acétates, trifluorométhanesulfonates, trifluoroacétates, trichloroacétates.

Des exemples spécifiques de sel d'or peuvent être HAuCl₄.

La solution alcoolique peut être, en particulier, une solution éthanolique comprenant un sel d'or HAuCl₄.

D'un point de vue concret, la première étape de mise en contact peut consister à immerger le matériau obtenu à l'étape a) dans une solution alcoolique comprenant un sel ou complexe d'or pendant une durée appropriée pour imprégner le matériau obtenu à l'étape a) et permettre à l'or de se complexer aux groupes complexants compris dans les unités répétitives issues de la polymérisation du premier monomère, les groupes complexants compris dans les unités répétitives issues de la polymérisation du deuxième monomère restant libres du fait qu'ils présentent un caractère complexant en milieu aqueux.

Entre la première étape de mise en contact et la deuxième étape de mise en contact, il peut être prévu une étape d'échange de solvant, consistant à échanger le solvant utilisé pour la première étape de mise en contact (en l'occurrence, un solvant alcoolique) par un solvant utilisé pour la deuxième de mise en contact (en l'occurrence, de l'eau).

Pour la deuxième étape de mise en contact, la solution aqueuse comprenant ledit au moins un deuxième élément métallique peut consister en une solution aqueuse, dans laquelle est solubilisé un sel ou un complexe dudit au moins un deuxième élément métallique (par exemple, un sel de cuivre).

A titre d'exemples de sel ou complexe métallique dudit au moins un deuxième élément métallique, on peut citer les chlorures, bromures, fluorures, iodures, iodates, nitrates, sulfates, sulfonates, sulfites, nitrites, phosphates, phosphites, cyanures, azidures, hydroxyles, chlorates, perchlorates, acétates, trifluorométhanesulfonates, trifluoroacétates, trichloroacétates, alcoxydes, acétylacétonates, cyclopentadiényles, alcynures métalliques.

Des exemples spécifiques de sel peuvent être CuCl₂ ou Cu(NO₃)₂.

La solution aqueuse peut être, en particulier, une solution aqueuse comprenant du chlorure de cuivre CuCl₂.

D'un point de vue concret, la deuxième étape de mise en contact peut consister à immerger le matériau déjà complexé à de l'or dans une solution aqueuse comprenant un sel ou complexe d'au moins un deuxième élément métallique pendant une durée appropriée pour imprégner le matériau et permettre audit au moins un deuxième élément métallique de se complexer aux groupes complexants compris dans les unités répétitives issues de la polymérisation du deuxième monomère.

Indépendamment du mode de réalisation envisagé (étape b) ou étape b'), la solution aqueuse et/ou alcoolique peut comprendre un composé tensioactif, lorsque le matériau issu de l'étape a) est un matériau massif poreux.

Après cette étape b) ou b'), le procédé de l'invention peut comprendre une ou plusieurs étapes de lavage du matériau ainsi obtenu, de sorte à éliminer la solution comprenant un sel ou complexe d'élément métallique stagnante dans la porosité du matériau.

Enfin, le procédé peut comprendre, après l'étape b) ou b') et l'éventuelle étape de lavage, une étape de séchage du matériau obtenu. Cette étape de séchage peut consister à soumettre ledit matériau à un chauffage, une lyophilisation ou à un séchage au dioxyde de carbone CO₂ supercritique.

De préférence, l'étape de séchage est une étape de séchage supercritique au CO₂. Pour ce faire, cette étape de séchage supercritique au CO₂ peut être précédée d'une étape d'échange de solvant consistant à remplacer le solvant présent dans la porosité du matériau par un solvant miscible au CO₂. Cette étape de séchage supercritique au CO₂ permet notamment de respecter l'intégrité physique du matériau.

L'on obtient, grâce au procédé de l'invention, des matériaux polymériques dopés par de l'or et éventuellement un autre élément métallique, ces matériaux pouvant se présenter sous forme de mousses.

En particulier, il peut s'agir de matériaux polymériques dopés uniquement par de l'or, l'or présentant, par exemple, une teneur massique supérieure à 30% et lesdits matériaux pouvant présenter une masse volumique inférieure à 100 mg/cm³.

En particulier encore, il peut s'agir de matériaux polymériques dopés par deux éléments métalliques distincts, auquel cas le deuxième élément métallique est différent de l'or, ce matériau pouvant être qualifiés de matériaux polymériques « bimétalliques ».

Par exemple, le premier élément métallique peut être de l'or et le deuxième élément métallique peut être du cuivre.

Ainsi, l'invention a trait à des matériaux polymériques dopés par un premier élément métallique, qui est de l'or, et au moins un deuxième élément métallique, ledit premier élément métallique et ledit au moins un deuxième élément métallique étant identiques ou différents l'un de l'autre, susceptibles d'être obtenus par un procédé tel que défini ci-dessus, les matériaux se présentant classiquement sous forme de mousses.

Ces matériaux peuvent être utilisés dans de nombreux domaines nécessitant la mise en oeuvre de matériaux dopés par des éléments métalliques et notamment dans l'élaboration d'éléments de cibles laser utilisés, en particulier, dans des expériences de fusion par confinement inertiel.

Ils peuvent être aussi utilisés en tant que catalyseur, en tant que matériaux luminescents ou en tant que matériaux magnétiques.

En particulier, ils peuvent être utilisés en tant qu'élément de cible laser.

Enfin, ils peuvent être utilisés en tant que matériaux à empreinte ionique. Pour ce faire, les matériaux dopés obtenus par le procédé de l'invention peuvent être soumis à un traitement acide, destiné à éliminer une partie des éléments métalliques complexés dans ledit matériau. Les sites vacants constituent ainsi des empreintes spécifiques de l'élément spécifique du métal initialement introduit. De ce traitement, il en résulte un matériau dit « à empreinte ionique », capable de piéger sélectivement l'élément métallique « imprimé » lors d'une mise en contact avec un fluide comprenant ledit élément métallique. Ce type de matériaux peut ainsi être utilisé pour l'extraction sélective de métaux, notamment, lors du retraitement d'effluents de combustibles nucléaires, tel que la séparation des lanthanides, ou encore la décontamination de fluides biologiques.

L'invention va, à présent, être décrite en référence aux exemples suivants donnés à titre illustratif et non limitatif.

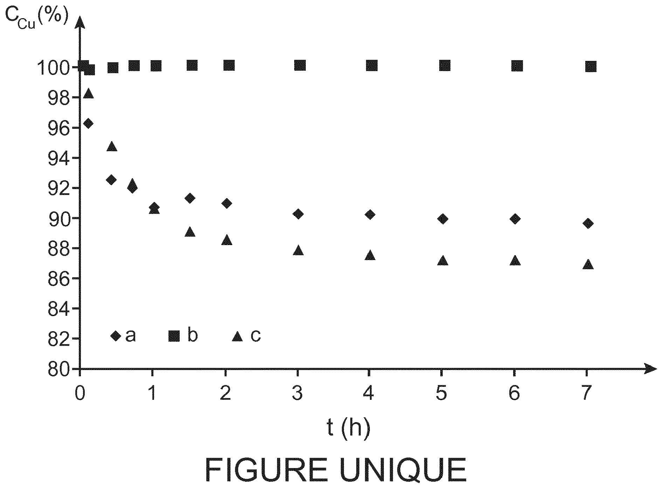

### BREVE DESCRIPTION DE LA FIGURE UNIQUE

La figure unique est un graphique illustrant l'évolution de la concentration en cuivre C_{Cu} (en %) en fonction de la durée d'immersion t(en heures), les courbes a), b) et c) étant respectivement celles obtenues avec les gels 1, 2 et 3.

### EXPOSÉ DÉTAILLÉ DE MODES DE RÉALISATION PARTICULIERS

### EXEMPLE 1

Le présent exemple illustre la synthèse de différentes mousses polymériques dopées par de l'or.

Pour ce faire, trois étapes sont mises en oeuvre :
- une étape de synthèse d'un monomère complexant du type cyclène comportant 4 groupes styrènes (symbolisé ci-après par l'abréviation TSC) (étape a) ;
- une étape de formation d'un gel polymérique par polymérisation dudit monomère en présence d'un autre monomère complexant (le vinylimidazole) (étape b) ;
- une étape d'immersion du gel obtenu dans une solution contenant un sel d'or suivie d'un séchage du gel ainsi immergé (étape c).

Un paragraphe d) est consacré aux résultats obtenus.

### a)Synthèse du monomère TSC

Cette étape a trait à la préparation du monomère TSC répondant à la formule suivante :

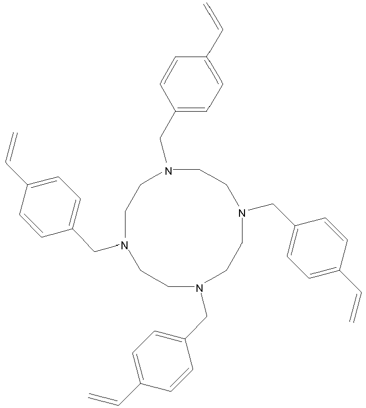

Ce monomère est préparé à partir du cyclène et du chlorométhylstyrène.

Pour ce faire, dans un bicol surmonté d'un réfrigérant et sous atmosphère d'argon, une solution contenant le cyclène (1 g), du dichlorométhane anhydre (25 mL) (lequel permet la solubilisation du cyclène), de l'acétonitrile anhydre (25 mL), de la triéthylamine (8 mL) et du chlorométhylstyrène (5,7 mL), est agitée et maintenue à reflux pendant 24 heures. La solution est ensuite filtrée à température ambiante. Le résidu est lavé à l'acétonitrile (20 mL) puis trois fois au méthanol (50 mL). Le solide est récupéré et séché sous vide.

### b) Etape de formation du gel polymérique

Cet exemple illustre la synthèse d'un gel polymérique obtenu par polymérisation du monomère TSC, d'un autre monomère complexant (le vinylimidazole, symbolisé ci-après VI) et d'un agent de réticulation, le divinylbenzène (symbolisé ci-après DVB).

Pour ce faire, dans un ballon, du monomère TSC (0,1386 g), du vinylimidazole (0,2772 g), du DVB (0,0462 g) et de l'azoisobutyronitrile (AiBN, 0,0462 g) sont solubilisés avec du tétrahydrofurane (3 mL). Ensuite, un solvant porogène (le phtalate de diéthyle, symbolisé ci-après DEP) (9 mL) est ajouté. La solution est dégazée avec un gaz inerte (de l'argon) pendant 5 minutes. Ensuite, la solution (à raison de 1 mL dans chaque moule) est injectée dans des moules cylindriques placés sous atmosphère inerte. La polymérisation est effectuée à 60°C pendant 24 heures. Les gels sont démoulés dans une solution d'éthanol, qui est changée trois fois.

### c) Etape d'immersion des gels obtenus suivie d'un séchage

Cette étape d'immersion est réalisée selon différentes modalités :
- une modalité conforme à l'invention, dans laquelle l'immersion est effectuée en milieu aqueux ;
- une modalité non conforme à l'invention, dans laquelle l'immersion est effectuée en milieu alcoolique.

### *Modalité conforme à l'invention

Pour ce faire, un gel obtenu conformément à l'étape b) est soumis à un échange de solvant, c'est-à-dire à un échange de l'éthanol par de l'eau. Plus spécifiquement, l'éthanol est changé progressivement avec l'eau par des mises en contact successives du gel avec les solutions suivantes : une solution éthanol à 100% de l'eau, une solution éthanol/eau 75/25 (v/v), une solution éthanol/eau 50/50 (v/v), une solution éthanol/eau 25/75 (v/v), et de l'eau distillée.

Le gel est ensuite immergé pendant 48 heures dans une solution aqueuse d'un sel d'or, HAuCl₄*3H₂O (18 mL ; Au=8,9 mg/mL). Ensuite, le gel est lavé trois fois avec cette solution aqueuse. La solution aqueuse est ensuite échangé progressivement avec de l'éthanol par des mises en contact successives du gel avec les solutions suivantes : de l'eau, une solution éthanol/eau 25/75 (v/v), une solution éthanol/eau 50/50 (v/v), une solution éthanol/eau 75/25 (v/v) et une solution éthanol à 100%.

Le gel est ensuite séché par un séchage supercritique au CO₂, moyennant il résulte une mousse.

### *Modalité non conforme à l'invention

Le gel obtenu à l'étape b) est immergé pendant 48 heures dans une solution éthanolique d'un sel d'or, HAuCl₄*3H₂O (18 mL ; Au=8,9 mg/mL). Ensuite, le gel est lavé trois fois avec cette solution éthanolique.

Le gel est ensuite séché par un séchage supercritique au CO₂, moyennant quoi il résulte une mousse.

### d) Résultats

La mousse obtenue selon la modalité conforme à l'invention présente une surface spécifique de 156±10 m²/g et une teneur massique en or de 39,8 ± 2,0.

La mousse obtenue selon la modalité non conforme à l'invention présente une surface spécifique de 112±2 m²/g et une teneur massique en or de 32,1±1,3.

Ainsi, les inventeurs ont pu, de manière surprenante, mettre en évidence, que la mise en oeuvre de l'étape d'immersion en milieu aqueux contribue à augmenter la teneur en or dans le matériau final.

Sans être lié par la théorie, les auteurs ont pu attribuer cet effet technique à la capacité du monomère TSC à complexer l'or de manière plus efficace en milieu aqueux qu'en milieu alcoolique.

En effet, en reproduisant l'exemple ci-dessus, avec uniquement du TSC et du DVB (à raison d'une proportion massique 50/50) et en réalisant l'étape d'immersion dans une solution éthanolique, le matériau obtenu ne comporte une teneur en or que de 10,3±0,4.

En contrepartie, en reproduisant l'exemple ci-dessus, avec uniquement du VI et du DVB (à raison d'une proportion massique 50/50) et en réalisant l'étape d'immersion dans une solution éthanolique, le matériau obtenu ne comporte une teneur en or que de 25,8±1,2, une surface spécifique de 160±15 m²/g et une masse volumique de 88,5±3,8 mg/cm³.

### EXEMPLE 2

Le présent exemple illustre la synthèse de différentes mousses polymériques dopées par de l'or.

Pour ce faire, trois étapes sont mises en oeuvre :
- une étape de synthèse d'un monomère complexant : le 5-iodosalicylaldoxime (symbolisé ci-après par l'abréviation VSO) (étape a) ;
- une étape de formation d'un gel polymérique par polymérisation dudit monomère en présence d'un autre monomère complexant (le vinylimidazole) (étape b) ;
- une étape d'immersion du gel obtenu dans une solution contenant un sel d'or suivie d'un séchage du gel ainsi immergé (étape c).

Un paragraphe d) est consacré aux résultats obtenus.

### a)Synthèse du 5-iodosalicylaldoxime

Cette étape illustre la préparation du 5-iodosalicylaldoxime de formule suivante :

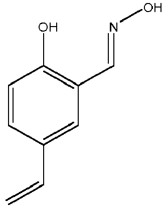

Ce monomère est réalisé selon le schéma de synthèse suivant : 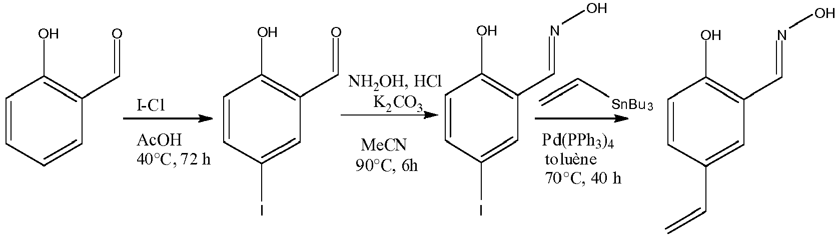 AcOH signifiant acide acétique, MeCN signifiant acétonitrile, Ph signifiant phényle, et Bu signifiant n-butyle.

Ainsi la première étape consiste à partir de la salicylaldéhyde de réaliser la 5-iodosalicylaldéhyde.

Dans un bicol de 500 mL muni d'un réfrigérant sont placés sous agitation 160 mL d'acide acétique glacial et 1,4 mL (100 mmol) de salicylaldéhyde. Une solution de 10 g (1,1 éq., 110 mmol) de monochlorure d'iode dissous dans un minimum d'acide acétique est ensuite ajoutée au mélange. La réaction est maintenue sous agitation à T=40°C pendant 8 jours. Le solvant est ensuite évaporé et le résidu est solubilisé avec de l'éther diéthylique (200 mL). La solution résultante est lavée trois fois avec les solutions suivantes :
(i) une solution aqueuse saturée en thiosulfate de sodium (Na₂S₂O₃, 100 mL) ;
(ii) une solution saturée en NaCl (100 mL) ; et
(iii) de l'eau distillée (150 mL).

Le solvant est ensuite évaporé et le produit est recristallisé dans un mélange heptane/éther diéthylique (50 :50). Les cristaux sont récupérés par filtration sur Fritté. Ils sont lavés à l'heptane et recristallisés dans du dichlorométhane.

La deuxième étape consiste à réaliser du 5-iodosalicylaldoxime à partir du 5-iodosalicylaldéhyde préparé préalablement.

Pour ce faire, 35 mmol (3,5 éq., 2,40 g) de chlorhydrate d'hydroxylamine (NH₂OH.HCl) sont ajoutés à une solution de 4 g de K₂CO₃ (35 mmol, 3,5 éq.) et de 5-iodosalicylaldéhyde (10 mmol, 2,50 g) dans 50 mL d'acétonitrile. Le mélange est chauffé à 70°C sous agitation pendant 24 heures.

A température ambiante, la solution est filtrée sur Büchner et le résidu solide est éliminé. Le filtrat est ensuite évaporé. Le résidu est repris dans de l'eau (250 mL). Le pH est ajusté à 4 par ajout d'une solution d'acide chlorhydrique. Le produit est extrait avec du dichlorométhane. La phase organique est séchée sur MgSO₄, filtrée puis le solvant est évaporé. Le solide est ensuite purifié par chromatographie sur colonne de silice (éluant : Heptane/Ether diéthylique 80/20) puis le filtrat est évaporé.

La troisième étape consiste enfin à réaliser du 5-vinylsalicylaldoxime à partir du 5-iodosalicylaldoxime préparé préalablement.

Pour ce faire, dans un tube de Schlenk de 300 mL, séché dans les conditions de Grignard et purgé à l'argon sont introduits, successivement, sous agitation et dans l'ordre 3,94 g (15 mmol) de 5-iodosalicylaldoxime, 30 mL de toluène anhydre, 879 mg (5% mol) de Pd(PPh₃)₄ et 6,60 mL de vinylétain CH₂=CH-SnBu₃ (Bu signifiant n-butyle). Le mélange est dégazé, purgé à l'argon et chauffé à 70°C sous forte agitation pendant 48 heures.

En fin de réaction, la solution est filtrée sur célite (avec le solvant éther diéthylique). Les solvants du filtrat sont évaporés.

Le résidu est purifié par colonne chromatographique (éluants : 400 mL d'heptane, 500 mL d'un mélange heptane/éther diéthylique 95 :5 et heptane/éther diéthylique 90 :10.

### b) Etape de formation du gel polymérique

Cet exemple illustre la synthèse d'un gel polymérique obtenu par polymérisation du monomère VSO, d'un autre monomère complexant (le vinylimidazole, symbolisé ci-après VI) et d'un agent de réticulation, le divinylbenzène (symbolisé ci-après DVB).

Pour ce faire, dans un ballon, du monomère VI (0,16065 g), du VSO (0,16065 g), du DVB (0,1377 g) et de l'azoisobutyronitrile (AiBN, 0,0459 g) et un solvant porogène DEP (9 mL) sont dégazés pendant 5 minutes avec un gaz inerte (de l'argon). Ensuite, la solution (à raison de 1 mL dans chaque moule) est injectée dans des moules cylindriques placés sous atmosphère inerte. La polymérisation est effectuée à 80°C pendant 24 heures. Les gels sont démoulés dans une solution d'éthanol, qui est changée trois fois.

### c) Etape d'immersion des gels obtenus suivie d'un séchage

Cette étape d'immersion est réalisée selon différentes modalités :
- une modalité conforme à l'invention, dans laquelle l'immersion est effectuée en milieu aqueux ;
- une modalité non conforme à l'invention, dans laquelle l'immersion est effectuée en milieu alcoolique.

### *Modalité conforme à l'invention

Pour ce faire, un gel obtenu conformément à l'étape b) est soumis à un échange de solvant, c'est-à-dire à un échange de l'éthanol par de l'eau. Plus spécifiquement, l'éthanol est changé progressivement avec l'eau par des mises en contact successives du gel avec les solutions suivantes : une solution éthanol à 100% de l'eau, une solution éthanol/eau 75/25 (v/v), une solution éthanol/eau 50/50 (v/v), une solution éthanol/eau 25/75 (v/v), et de l'eau distillée.

Le gel est ensuite immergé pendant 48 heures dans une solution aqueuse d'un sel d'or, HAuCl₄*3H₂O (18 mL ; Au=8,9 mg/mL). Ensuite, le gel est lavé trois fois avec cette solution aqueuse. La solution aqueuse est ensuite échangé progressivement avec de l'éthanol par des mises en contact successives du gel avec les solutions suivantes : de l'eau, une solution éthanol/eau 25/75 (v/v), une solution éthanol/eau 50/50 (v/v), une solution éthanol/eau 75/25 (v/v) et une solution éthanol à 100%.

Le gel est ensuite séché par un séchage supercritique au CO₂, moyennant il résulte une mousse.

### *Modalité non conforme à l'invention

Le gel obtenu à l'étape b) est immergé pendant 48 heures dans une solution éthanolique d'un sel d'or, HAuCl₄*3H₂O (18 mL ; Au=8,9 mg/mL). Ensuite, le gel est lavé trois fois avec cette solution éthanolique.

Le gel est ensuite séché par un séchage supercritique au CO₂, moyennant quoi il résulte une mousse.

### d) Résultats

La mousse obtenue selon la modalité conforme à l'invention présente une surface spécifique de 219±10 m²/g, une teneur massique en or de 41,5±1,7 et une masse volumique de 93,4 ±4,3 mg/cm³.

La mousse obtenue selon la modalité non conforme à l'invention présente une surface spécifique de 277±15 m²/g et une teneur massique en or de 15,7±0,6.

Ainsi, les inventeurs ont pu, de manière surprenante, mettre en évidence, que la mise en oeuvre de l'étape d'immersion en milieu aqueux contribue à augmenter substantiellement la teneur en or dans le matériau final.

Sans être lié par la théorie, les auteurs ont pu attribuer cet effet technique à la capacité du monomère VSO à complexer l'or en milieu aqueux et non en milieu alcoolique.

En effet, en reproduisant l'exemple ci-dessus, avec uniquement du VSO et du DVB (à raison d'une proportion massique 50/50) et en réalisant l'étape d'immersion dans une solution éthanolique, le matériau obtenu ne comporte une teneur en or que de 0,5±0,0, cette faible teneur permettant de conclure que ce monomère ne permet pas de complexer l'or dans un tel milieu. La faible teneur mesurée en or dans le matériau peut résulter d'un dépôt d'or par absorption dans la porosité du matériau.

En contrepartie, en reproduisant l'exemple ci-dessus, avec uniquement du VSO et du DVB (à raison d'une proportion massique 50/50) et en réalisant l'étape d'immersion dans de l'eau, le matériau obtenu comporte une teneur en or de 37,0±0,3, ce qui atteste de la capacité exceptionnelle du VSO à complexer de l'or en milieu aqueux. Sans être lié par la théorie, ce résultat peut être attribué à un phénomène d'aurophilie, c'est-à-dire à l'attraction mutuelle des atomes d'or. Quant à la masse volumique du matériau, elle est de 200±9% mg/cm³. On peut aussi, en conclure, que l'association du monomère VSO avec le monomère VI permet à la fois d'augmenter la teneur en or mais aussi de diminuer la masse volumique en-dessous de 100 mg/cm³.

Ainsi, le procédé de l'invention peut permettre de maximiser la teneur en or tout en contrôlant la masse volumique finale du matériau.

En conclusion, au regard des exemples 1 et 2, les matériaux dopés à l'or obtenus selon les modalités de l'invention présentent une teneur massique autour de 40% mais la surface spécifique des matériaux diffère. Ainsi, selon les propriétés souhaitées, l'association d'au moins deux monomères complexants conformément aux modalités de l'invention permet de moduler à la fois la teneur en or mais aussi les propriétés morphologiques.

### EXEMPLE 3

Le présent exemple illustre la synthèse d'une mousse bimétallique or-cuivre selon les modalités de l'invention.

Pour ce faire, un gel obtenu à l'étape b) de l'exemple 2 est immergé, dans un premier temps, pendant 24 heures, dans une solution éthanolique d'un sel d'or, HAuCl₄*3H₂O (18 mL ; Au=3 mg/mL). Durant cette étape, les unités répétitives issues de la polymérisation du monomère VI capte l'or.

Après cette étape, le gel est lavé trois fois avec de l'éthanol puis le gel résultant soumis à un échange de solvant, c'est-à-dire à un échange de l'éthanol par de l'eau. Plus spécifiquement, l'éthanol est changé progressivement avec l'eau par des mises en contact successives du gel avec les solutions suivantes : une solution éthanol à 100% de l'eau, une solution éthanol/eau 75/25 (v/v), une solution éthanol/eau 50/50 (v/v), une solution éthanol/eau 25/75 (v/v), et de l'eau distillée.

Le gel est ensuite immergé pendant 24 heures dans une solution aqueuse d'un sel de cuivre CuCl₂ (18 mL ; Cu=3 mg/mL). Durant cette étape, les unités répétitives issues de la polymérisation du monomère VSO capte le cuivre.

Ensuite, le gel est lavé trois fois avec cette solution aqueuse. La solution aqueuse est ensuite échangée progressivement avec de l'éthanol par des mises en contact successives du gel avec les solutions suivantes : de l'eau, une solution éthanol/eau 25/75 (v/v), une solution éthanol/eau 50/50 (v/v), une solution éthanol/eau 75/25 (v/v) et une solution éthanol à 100%.

Le gel est ensuite séché par un séchage supercritique au CO₂, moyennant il résulte une mousse.

Le cuivre est exclusivement complexé par les unités répétitives issues du VSO, du fait que la complexation intervient en milieu aqueux, les fonctions complexantes du VSO n'étant pas occupées par de l'or lors de la première immersion, du fait que cette première immersion intervient en milieu alcoolique.

Sans être lié par la théorie, ceci découle des essais complémentaires suivants :
- un essai réalisé avec un gel réalisé en milieu éthanolique comprenant uniquement des unités répétitives issues de la polymérisation du monomère VSO (dit gel 1) ;
- un essai réalisé avec un gel comprenant uniquement des unités répétitives issues de la polymérisation du monomère VI complexées avec de l'or en milieu éthanolique (dit gel 2) ; et
- un essai réalisé avec un gel comprenant des unités répétitives issues de la polymérisation du monomère VI complexées avec de l'or en milieu éthanolique et comprenant des unités répétitives libres issues de la polymérisation du monomère VSO (dit gel 3) .

Après un échange progressif de l'éthanol avec de l'eau, les gels sont immergés dans une solution aqueuse de cuivre pendant une durée allant jusqu'à 7 heures. La concentration de la solution de cuivre est mesurée en fonction de la durée d'immersion du gel concerné. Les résultats sont reportés sur la figure unique qui est un graphique illustrant l'évolution de la concentration en cuivre C_{Cu} (en %) en fonction de la durée d'immersion t (en heures), les courbes a), b) et c) étant respectivement celles obtenues avec les gels 1, 2 et 3.

Le gel 2 ne complexe pas le cuivre. Ce résultat confirme que la formation du complexe d'or est stable dans une solution aqueuse à pH=4.

Le gel 1 permet, au bout de 7 heures d'immersion, une diminution de la concentration en cuivre de la solution d'immersion de 10%.

Le gel 3 permet, au bout de 7 heures d'immersion, une diminution de la concentration en cuivre de la solution d'immersion de 13%. Dans ce gel, la capture du cuivre est réalisée grâce au monomère VSO. Cette capture confirme que les fonctions complexantes du monomère n'étaient pas occupées par des atomes d'or issus de la première étape d'immersion.

## Revendications

1. Procédé de préparation d'un matériau polymérique dopé par un premier élément métallique, qui est de l'or et au moins un deuxième élément métallique, ledit premier élément métallique et ledit, au moins un deuxième élément métallique étant identiques ou différents l'un de l'autre, ledit procédé comprenant :
a) une étape de copolymérisation d'au moins un premier monomère comprenant au moins un groupe chélateur dudit premier élément métallique et d'au moins un deuxième monomère comprenant au moins un groupe chélateur d'au moins un deuxième élément métallique, moyennant quoi l'on obtient un matériau polymérique comprenant des unités répétitives issues de la polymérisation dudit premier monomère, lesquelles unités répétitives comprennent au moins un groupe chélateur dudit premier élément métallique et comprenant des unités répétitives issues de la polymérisation dudit deuxième monomère, lesquelles unités répétitives comprennent au moins un groupe chélateur dudit au moins un deuxième élément métallique, ledit deuxième monomère étant choisi parmi :
- les monomères aromatiques comprenant au moins un cycle aromatique, lequel cycle comprend au moins un groupe éthylénique, au moins un groupe hydroxyde -OH, au moins un groupe oxime et les éventuels sels de ceux-ci ; et
- les monomères comprenant un groupe amine alicyclique ; et
ledit premier monomère étant un monomère cyclique comprenant au moins un groupe azoté ;
b) lorsque le premier élément métallique, et ledit au moins un deuxième élément métallique sont identiques (c'est-à-dire qu'ils correspondent tous les deux à l'élément or), une étape de mise en contact du matériau obtenu en a) avec une solution aqueuse comprenant de l'or, moyennant quoi l'or est complexé aux groupes chélateurs susmentionnés ; et
b') lorsque le premier élément métallique et ledit au moins un deuxième élément métallique sont différents, une première étape de mise en contact du matériau obtenu en a) avec une solution alcoolique comprenant de l'or suivie d'une deuxième étape de mise en contact du matériau avec une solution aqueuse comprenant ledit au moins un deuxième élément métallique.

2. Procédé selon la revendication 1, dans lequel le premier monomère est un monomère hétéroaromatique comprenant un ou plusieurs atomes d'azote.

3. Procédé selon l'une quelconque des revendications précédentes, dans lequel le premier monomère est un monomère vinylimidazole.

4. Procédé selon l'une quelconque des revendications précédentes, dans lequel le deuxième monomère répond à la formule (II) suivante : 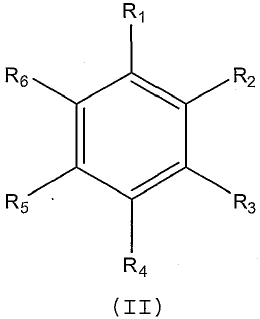 dans laquelle :
- R₁ est un groupe éthylénique ;
- R₂, R₃, R₄, R₅ et R₆ représentent, indépendamment l'un de l'autre, un atome d'hydrogène, un groupe -OH, un groupe amine, un groupe -CHO, un groupe oxime, un groupe hydrazone, un groupe carboxyle -COOH, un atome d'halogène, un groupe trialkylsilane, et les éventuels sels de ceux-ci, à condition que l'un au moins des groupes R₂ à R₆ représente un groupe -OH et l'un au moins des groupes R₂ à R₆ représente un groupe oxime.

5. Procédé selon l'une quelconque des revendications 1 à 3, dans lequel le deuxième monomère est un monomère comprenant un groupe cyclame répondant à la formule (IV) suivante : 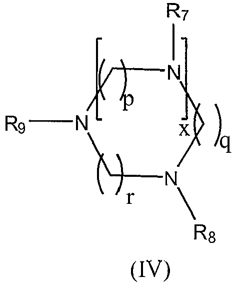 dans laquelle :
- R₇, R₈ et R₉ représentent un groupe styrénique ; et
- p, q, r, x sont des entiers allant de 0 à 20, à la condition que, lorsque x est égal à 0, (r+q) est au moins égale à 2, et lorsque x est égal à 1, au moins l'un des p, q, r est différent de 0.

6. Procédé selon l'une quelconque des revendications précédentes, dans lequel l'étape de copolymérisation est réalisée en présence d'un ou plusieurs comonomères choisis parmi les monomères styréniques et les monomères acrylates, comprenant au moins deux groupes éthyléniques.

7. Procédé selon la revendication 6, dans lequel le ou les comonomères répondent à l'une des formules (VI) ou (VII) suivantes : 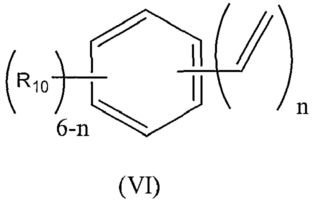 dans laquelle les (6-n) R₁₀, identiques ou différents, représentent un atome d'hydrogène, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés et n est un entier allant de 1 à 3 ; 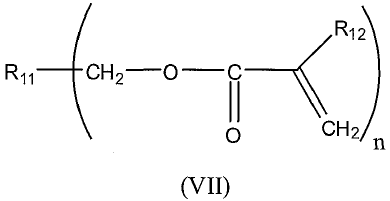 dans laquelle R₁₁ représente un groupe alkyle, R₁₂ représente H ou un groupe alkyle et n étant un entier allant de 1 à 3.

8. Procédé selon l'une quelconque des revendications précédentes, dans lequel l'étape de polymérisation est réalisée en présence d'au moins un solvant porogène, qui est un solvant organique polaire ou apolaire choisi parmi les solvants éthers, le diméthylsulfoxyde, les solvants phthalates, les solvants alcooliques, les solvants aromatiques, les solvants cétones et les mélanges de ceux-ci.

9. Procédé selon l'une quelconque des revendications précédentes, dans lequel, dans l'étape b), la solution aqueuse comprenant de l'or est une solution aqueuse, dans laquelle est solubilisé un sel ou un complexe d'or.

10. Procédé selon l'une quelconque des revendications 1 à 8, dans lequel, dans l'étape b'), la solution alcoolique comprenant de l'or est une solution alcoolique, dans laquelle est solubilisé un sel ou un complexe d'or.

11. Procédé selon la revendication 10, dans lequel, dans l'étape b'), entre la première étape de mise en contact et la deuxième étape de mise en contact, il est prévu une étape d'échange de solvant, consistant à échanger le solvant alcoolique utilisé pour la première étape de mise en contact par de l'eau.

12. Procédé selon l'une quelconque des revendications précédentes, dans lequel, dans l'étape b'), la solution aqueuse comprenant ledit au moins un deuxième élément métallique est une solution aqueuse, dans laquelle est solubilisé un sel ou un complexe dudit au moins un deuxième élément métallique.

13. Matériau polymérique dopé par un premier élément métallique, qui est de l'or et au moins un deuxième élément métallique, ledit premier élément métallique et ledit, au moins un deuxième élément métallique étant identiques ou différents l'un de l'autre susceptible d'être obtenu par un procédé tel que défini selon l'une quelconque des revendications 1 à 12.

14. Matériau polymérique selon la revendication 13, dans lequel le deuxième élément métallique est de l'or.

15. Matériau polymérique selon la revendication 13, dans lequel le deuxième élément métallique est différent de l'or.

## Patentansprüche

1. Verfahren zur Herstellung eines Polymermaterials, das mit einem ersten metallischen Element, bei dem es sich um Gold handelt, und mindestens einem zweiten metallischen Element dotiert ist, wobei das erste metallische Element und das mindestens eine zweite metallische Element identisch oder voneinander verschieden sind, wobei das Verfahren umfasst:
a) einen Schritt einer Copolymerisation mindestens eines ersten Monomers, das mindestens eine Chelatbildnergruppe des ersten metallischen Elementes aufweist, und mindestens eines zweiten Monomers, das mindestens eine Chelatbildnergruppe mindestens eines zweiten metallischen Elementes aufweist, wodurch man ein Polymermaterial erhält, das Wiederholeinheiten aufweist, die aus der Polymerisation des ersten Monomers hervorgegangen sind, wobei die Wiederholeinheiten mindestens eine Chelatbildnergruppe des ersten metallischen Elementes aufweisen, und Wiederholeinheiten aufweist, die aus der Polymerisation des zweiten Monomers hervorgegangen sind, wobei die Wiederholeinheiten mindestens eine Chelatbildnergruppe des mindestens eines zweiten metallischen Elementes aufweisen, wobei das zweite Monomer gewählt ist aus:
aromatischen Monomeren, die mindestens einen aromatischen Ring aufweisen, wobei der Ring mindestens eine Ethylen-Gruppe, mindestens eine Hydroxid-Gruppe -OH, mindestens eine Oxim-Gruppe, und etwaige Salze von diesen aufweist; und
die Monomere eine alizyklische Amin-Gruppe aufweisen; und
das erste Monomer ein zyklisches Monomer ist, das mindestens eine stickstoffhaltige Gruppe aufweist;
b) wenn das erste metallische Element und das mindestens eine zweite metallische Element identisch sind (d.h. dass beide dem Element Gold entsprechen), einen Schritt des In-Kontakt-Bringens des bei a) erhaltenen Materials mit einer goldhaltigen wässrigen Lösung, wodurch das Gold mit den zuvor erwähnten Chelatbildnergruppen komplexiert wird; und
b') wenn das erste metallische Element und das mindestens eine zweite metallische Element unterschiedlich sind, einen ersten Schritt des In-Kontakt-Bringens des bei a) erhaltenen Materials mit einer goldhaltigen alkoholischen Lösung, gefolgt von einem zweiten Schritt des In-Kontakt-Bringens des Materials mit einer wässrigen Lösung, die das mindestens eine zweite metallische Element enthält.

2. Verfahren nach Anspruch 1, bei dem das erste Monomer ein heteroaromatisches Monomer ist, das eines oder mehrere Stickstoffatome aufweist.

3. Verfahren nach einem der vorhergehenden Ansprüche, wobei das erste Monomer ein Vinylimidazol-Monomer ist.

4. Verfahren nach einem der vorhergehenden Ansprüche, wobei das zweite Monomer der folgenden Formel (II) entspricht: 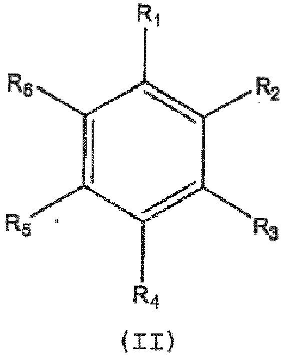 wobei:
R₁ eine Ethylen-Gruppe ist;
R₂, R₃, R₄, R₅ und R₆ unabhängig voneinander ein Wasserstoffatom, eine -OH-Gruppe, eine Amin-Gruppe, eine -CHO-Gruppe, eine Oxim-Gruppe, eine Hydrazon-Gruppe, eine Carboxyl-Gruppe -COOH, ein Halogen-Atom, eine Trialkylsilan-Gruppe, und etwaige Salze von diesen repräsentieren, unter der Bedingung, dass mindestens eine der Gruppen R₂ bis R₆ eine OH-Gruppe repräsentiert und mindestens eine der Gruppen R₂ bis R₆ eine Oxim-Gruppe repräsentiert.

5. Verfahren nach einem der Ansprüche 1 bis 3, wobei das zweite Monomer ein Monomer ist, das eine Cyclam-Gruppe aufweist, die der folgenden Formel (IV) entspricht. 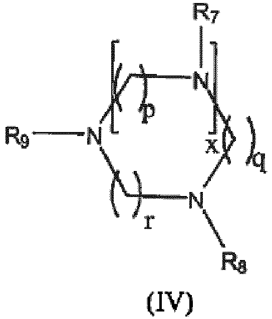 wobei:
R₇, R₈ und R₉ eine Styrol-Gruppe repräsentieren; und
p, q, r, x Ganzzahlen zwischen 0 und 20 sind, unter der Bedingung, dass, wenn x gleich 0 ist, (r+q) mindestens 2 ist, und wenn x gleich 1 ist, mindestens eines von p, q, r verschieden von 0 ist.

6. Verfahren nach einem der vorhergehenden Ansprüche, wobei der Schritt einer Copolymerisation unter Vorhandensein eines oder mehrere Comonomere realisiert wird, die aus StyrolMonomeren und Acrylat-Monomeren gewählt sind, welche mindestens zwei Ethylen-Gruppen aufweisen.

7. Verfahren nach Anspruch 6, wobei das oder die Comonomere mindestens einer der folgenden Formeln (VI) oder (VII) entsprechen: 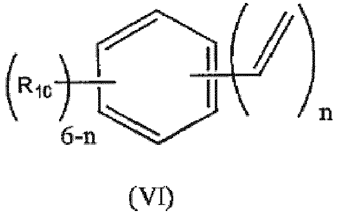 wobei die (6-n) R₁₀, die identisch oder unterschiedlich sein können, ein Wasserstoffatom, eine Alkyl-Gruppe, eine Aryl-Gruppe, eine -O-Aryl-Gruppe, eine -Alkyl-Gruppe, eine Acyl-Gruppe, eine AlkylarylGruppe oder ein Halogenatom repräsentieren, wobei die Alkyl-, Aryl-, Alkylaryl-, -O-Aryl- und -O-AlkylGruppen eventuell perfluoriert sind und n eine Ganzzahl zwischen 1 und 3 ist; 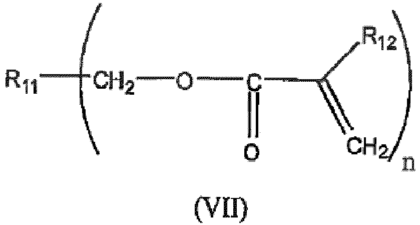 wobei R₁₁ eine Alkyl-Gruppe repräsentiert, R₁₂ -H oder eine Alkyl-Gruppe repräsentiert und n eine Ganzzahl zwischen 1 und 3 ist.

8. Verfahren nach einem der vorhergehenden Ansprüche, wobei der Schritt der Polymerisation unter Vorhandensein mindestens eines porenbildenden Lösungsmittels durchgeführt wird, bei dem es sich um ein polares oder unpolares organisches Lösungsmittel handelt, das gewählt ist aus: Ether-Lösungsmitteln, Dimethylsulfoxid, Phthalat-Lösungsmitteln, alkoholischen Lösungsmitteln, aromatischen Lösungsmitteln, Keton-Lösungsmitteln, und Gemischen von diesen.

9. Verfahren nach einem der vorhergehenden Ansprüche, wobei in dem Schritt b) die goldhaltige wässrige Lösung eine wässrige Lösung ist, in der ein Salz oder ein Goldkomplex solubilisiert ist.

10. Verfahren nach einem der Ansprüche 1 bis 8, wobei in Schritt b') die goldhaltige alkoholische Lösung eine alkoholische Lösung ist, in der ein Salz- oder ein Goldkomplex solubilisiert ist.

11. Verfahren nach Anspruch 10, wobei in Schritt b'), zwischen dem ersten Schritt des In-Kontakt-Bringens und dem zweiten Schritt des In-Kontakt-Bringens, ein Schritt eines Lösungsmittelaustauschs vorgesehen ist, der darin besteht, das alkoholische Lösungsmittel, das für den ersten Schritt des In-Kontakt-Bringens verwendet wurde, gegen Wasser auszutauschen.

12. Verfahren nach einem der vorhergehenden Ansprüche, wobei in dem Schritt b') die wässrige Lösung, die das mindestens eine zweite metallische Element enthält, eine wässrige Lösung ist, in der ein Salz oder ein Komplex des mindestens einen zweiten metallischen Elementes solubilisiert ist.

13. Polymermaterial, das mit einem ersten metallischen Element, bei dem es sich um Gold handelt, und mindestens einem zweiten metallischen Element dotiert ist, wobei das erste metallische Element und das mindestens eine zweite metallische Element, die identisch oder voneinander verschieden sein können, mittels eines Verfahrens nach einem der Ansprüche 1 bis 12 erzielt werden können.

14. Polymermaterial nach Anspruch 13, wobei es sich bei dem zweiten Element um Gold handelt.

15. Polymermaterial nach Anspruch 13, wobei das zweite Element von Gold verschieden ist.

## Claims

1. A method for preparing a polymeric material doped with a first metal element, which is gold and at least one second metal element, said first metal element and said, at least one second metal element being identical or different from each other, said method comprising:
a) a step for copolymerization of at least one first monomer comprising at least one chelating group of said first metal element and of at least one second monomer comprising at least one chelating group, of at least a second metal element, in return for which a polymeric material is obtained comprising recurrent units stemming from the polymerization of said first monomer, which recurrent units comprise at least one chelating group of said first metal element and comprising recurrent units stemming from the polymerization of said second monomer, which recurrent units comprise at least one chelating group of said at least one second metal element, said second monomer being selected from among:
- aromatic monomers comprising at least one aromatic ring, which ring comprises at least one ethylenic group, at least one hydroxide group -OH, at least one oxime group and the optional salts thereof; and
- the monomers comprising an alicyclic amine group; and
said first monomer being a cyclic monomer comprising at least one nitrogen-containing group;
b) when the first metal element, and said at least one second metal element are identical (i.e. they both correspond to the gold element), a step for putting the material obtained in a) in contact with an aqueous solution comprising gold, in return for which the gold is complexed to the aforementioned chelating groups; and
b') when the first metal element and said at least one second metal element are different, a first step for putting the material obtained in a) in contact with an alcoholic solution comprising gold followed by a second step for putting the material in contact with an aqueous solution comprising said at least one second metal element.

2. The method according to claim 1, wherein the first monomer is a heteroaromatic monomer comprising one or several nitrogen atoms.

3. The method according to any of the preceding claims, wherein the first monomer is a vinylimidazole monomer.

4. The method according to any of the preceding claims, wherein the second monomer fits the following formula (II) : 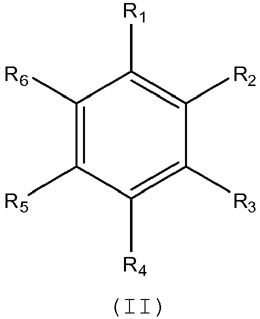 wherein:
- R₁ is an ethylenic group;
- R₂, R₃, R₄, R₅ and R₆ represent independently of each other, a hydrogen atom, an -OH group, an amine group, a -CHO group, an oxime group, a hydrazone group, a carboxylic group -COOH, a halogen atom, a trialkylsilane group, and the optional salts thereof, provided that at least one of the groups R₂ to R₆ represents an -OH group and at least one of the groups R₂ to R₆ represents an oxime group.

5. The method according to any of claims 1 to 3, wherein the second monomer is a monomer comprising a cyclame group fitting the following formula (IV): 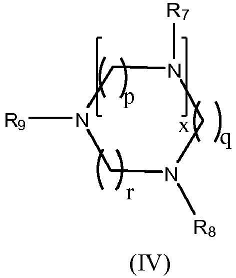 wherein:
- R₇, R₈ and R₉ represent a styrenic group; and
- p, q, r, x are integers ranging from 0 to 20, provided that, when x is equal to 0, (r+q) is at least equal to 2, and when x is equal to 1, at least one of p, q, r is different from 0.

6. The method according to any of the preceding claims, wherein the copolymerization step is achieved in the presence of one or several comonomers selected from styrenic monomers and acrylate monomers comprising at least two ethylenic groups.

7. The method according to claim 10 or 11, wherein the comonomer(s) fit(s) one of the following formulae (VI) or (VII): 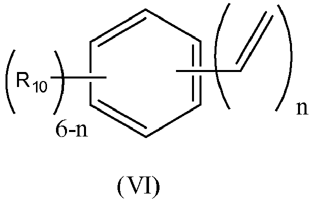 wherein the (6-n) R₁₀, either identical or different, represent a hydrogen atom, an alkyl group, an aryl group, an -O-aryl group, an -O-alkyl group, an acyl group, an alkylaryl group or a halogen atom, said alkyl, aryl, alkylaryl, -O-aryl, -O-alkyl groups being optionally perfluorinated and n is an integer ranging from 1 to 3; 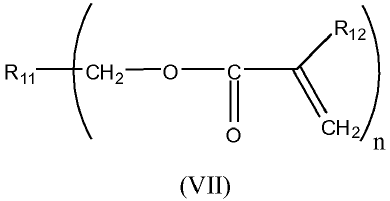 wherein R₁₁ represents an alkyl group, R₁₂ represents H or an alkyl group and n is an integer ranging from 1 to 3.

8. The method according to any of the preceding claims, wherein the polymerization step is carried out in the presence of at least one pore-forming solvent, which is a polar or apolar organic solvent selected from among ether solvents, dimethylsulfoxide, phthalate solvents, alcoholic solvents, aromatic solvents, ketone solvents and mixtures thereof.

9. The method according to any of the preceding claims, wherein, in step b), the aqueous solution comprising gold is an aqueous solution, in which is solubilized a gold salt or complex.

10. The method according to any of claims 1 to 15, wherein, in step b'), the alcoholic solution comprising gold is an alcoholic solution, in which is solubilized a gold salt or complex.

11. The method according to claim 10, wherein, in step b'), between the first contacting step and the second contacting step, a solvent exchange step is provided, consisting of exchanging the alcoholic solvent used for the first contacting step with water.

12. The method according to any of the preceding claims, wherein, in step b'), the aqueous solution comprising said at least one second metal element is an aqueous solution, in which is solubilized a salt or complex of said at least one second metal element.

13. A polymeric material doped with a first metal element, which is gold and at least one second metal element, said first metal element and said, at least one second metal element being identical or different from each other which may be obtained by a method as defined according to any of claims 1 to 12.

14. The polymeric material according to claim 13, wherein the second metal element is gold.

15. The polymeric material according to claim 13, wherein the second metal element is different gold.
